(19) Europäisches Patentamt
European Patent Office
Office européen des brevets

(11) EP 2 280 262 A1

(12) EUROPÄISCHE PATENTANMELDUNG

(43) Veröffentlichungstag:
02.02.2011 Patentblatt 2011/05

(51) Int Cl.:
*G01K 7/36* (2006.01)

(21) Anmeldenummer: 09450135.0

(22) Anmeldetag: 29.07.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA RS

(71) Anmelder:
• Süss, Dieter
3130 Herzogenburg (AT)
• Grössinger, Roland
1220 Wien (AT)

(72) Erfinder:
• Süss, Dieter
3130 Herzogenburg (AT)

• Grössinger, Roland
1220 Wien (AT)

(74) Vertreter: Ellmeyer, Wolfgang
Häupl & Ellmeyer KG
Mariahilfer Strasse 50
1070 Wien (AT)

Bemerkungen:
Die Patentansprüche 16bis23gelten als fallen gelassen, da die entsprechenden Anspruchsgebühren nicht entrichtet wurden (R. 45 (3) EPÜ).

(54) **Sensorvorrichtung zum Kontaktlosen Messen von Temperaturen durch Verwendung von magnetischen Materialien nahe von Phasenübergängen**

(57) Sensorvorrichtung mit einem Sensor (2) zur Bestimmung einer Temperatur oder einer Temperaturänderung innerhalb eines Temperaturoperationsbereiches und einem Detektor, wobei der Sensor (2) ein Sensormaterial (3) umfasst, das zumindest einen Phasenübergang erster Ordnung aufweist, und/oder aus einer magnetokalorischen Legierung oder einer Shape-Memory-Legierung besteht, wobei die kritische Temperatur des Sensormaterials (3) innerhalb des Temperaturoperationsbereichs liegt, und das Sensormaterial (3) zumindest in einer Phase magnetisch ist, und wobei das Sensormaterial (3) weichmagnetisch ist oder der Sensor (2) mindestens ein weichmagnetisches Material (5) umfasst, welches als Antwort auf ein externes zeitveränderliches magnetisches Feld eine periodisch veränderliche Magnetisierung aufweist, und der Detektor das vom Sensormaterial (3) oder vom weichmagnetischen Material (5) ausgesandte magnetische Feld detektiert, das zur Identifikation der Temperatur dient.

FIG.1

**Beschreibung**

Die Erfindung betrifft die Überwachung von Temperaturen und insbesondere eine dafür geeignete Vorrichtung entsprechend dem einleitenden Teil des Anspruches 1.

Die Messung von Temperaturen, insbesondere die Detektion der Überschreitung beziehungsweise Unterschreitung einer kritischen Temperatur ist für viele Bereiche von großer Bedeutung. Für Produkthaftungsfragen sowie Prozessüberwachung kann bei Wissen über kritische Temperaturen, die überschritten bzw. unterschritten wurden, Aussagen getroffen werden, ob Grenzwerte eingehalten wurden. So ist beispielsweise die Temperaturmessung in Autoreifen für die Verkehrssicherheit von großer Bedeutung um auf eine Fehlfunktion vorzeitig reagieren zu können.

Ein anderes Beispiel ist die gesetzlich vorgeschriebene Überwachung von Lebensmitteltransporten und Medikamentetransporten, wo die Einhaltung der vorgeschriebenen Toleranzen der Temperatur protokolliert werden muss. Bei der Überwachung von Kühlketten ist meist nicht die aktuelle Temperatur von Interesse, sondern die Frage, ob die Temperatur des Produkts während des gesamten Logistikprozesses einen zulässigen Maximalwert bzw. Minimalwert überschritten hat. Hierzu werden Indikator-Etiketten am Produkt angebracht. Diese Indikatoren verändern dauerhaft ihre Farbe, falls die zulässige Maximaltemperatur überschritten wurde.

All diese Indikatoren haben den Nachteil, dass sie schlecht automatisierbar auslesbar sind.

Ein zusätzliches Problem dieser Systeme ist die aufwändige Logistik, sodass die meisten Indikatoren schon im gekühlten Zustand an den Lebensmittelverpacker geliefert werden müssen. Eine Ausnahme bilden Farbindikatoren, die mit UV-Licht erst nach dem Abpacken der Lebensmittel aktiviert werden können. Es muss aber dann im Anschluss noch ein UV-Filter am Indikator angebracht werden, um eine Reaktivierung durch das Tageslicht zu verhindern.

Die Erfindung hat die Aufgabe, dieses Problem zu lösen und schlägt dazu vor, dass der Sensor ein Sensormaterial umfasst, das zumindest einen Phasenübergang erster Ordnung aufweist, und/oder aus einer magnetokalorischen Legierung oder einer Shape-Memory-Legierung besteht, wobei die kritische Temperatur des Sensormaterials innerhalb des Temperaturoperationsbereichs liegt, und wobei das Sensormaterial zumindest in einer Phase magnetisch ist, dass das Sensormaterial weichmagnetisch ist oder der Sensor mindestens ein weichmagnetisches Material umfasst, welches als Antwort auf ein externes zeitveränderliches magnetisches Feld eine periodisch veränderliche Magnetisierung aufweist, und dass der Detektor das vom Sensormaterial oder weichmagnetischen Material ausgesandte magnetische Feld detektiert, das zur Identifikation der Temperatur dient.

So kann der Sensor z.B. aus einem Plättchen bestehen, das einen Phasenübergang durchläuft, wenn eine kritische Temperatur über bzw. unterschritten wird. Dieses Plättchen ist zumindest in einer Phase magnetisch. Für die meisten technischen Anwendungen dieser Erfindung sind Phasenübergänge erster Ordnung (Phasenübergänge erster Ordnung zeigen idealisiert einen diskontinuierlichen Sprung der ersten Ableitung der Gibbs'schen freien Energie nach den dem Ordnungsparameter, wie z.B. die Magnetisierung) von besonderer Bedeutung, da diese eine abrupte Änderung der Magnetisierung als Funktion der Temperatur zeigen. Wie später ausführlich erklärt wird, sind die Sensoreigenschaften des Plättchens umso besser je größer die Änderung der Magnetisierung als Funktion der Temperatur ist.

Demgegenüber zeigen Phasenübergänge zweiter Ordnung eine kontinuierliche Änderung der Magnetisierung als Funktion der Temperatur. Beispiel eines Phasenüberganges zweiter Ordnung ist die Curie Temperatur, wo die ferromagnetische Phase zu der paramagnetischen Phase übergeht [1].

Beispiele von Phasenübergängen erster Ordnung können sowohl in magnetokalorischen Materialien als auch in Shape-Memory Legierungen (Formgedächtnislegierung) gefunden werden, welche somit im Rahmen der Erfindung als Sensormaterialien einsetzbar sind.

So findet beispielsweise bei Shape-Memory Legierungen (zB.: Ni-Mn-Ga) an der kritischen Temperatur eine Strukturänderung von Martensit (kleine Magnetisierung) zu Austenit (große Magnetisierung) statt.

Bei magnetokalorischen Materialien ist oft ein Phasenübergang erster Ordnung zu beobachten, bei dem beispielsweise eine antiferromagnetische Phase in eine ferromagnetische Phase übergeht. Magnetokalorische Materialien wurden kürzlich (1997) für die Realisierung von magnetischen Kühlschränken vorgeschlagen [2]. Für die magnetische Kühlung wird die Temperaturdifferenz bei der Entmagnetisierung von magnetokalorischen Materialien ausgenutzt. Aus den Hauptsätzen der Thermodynamik ergibt sich der Zusammenhang zwischen der Wärmemengeänderung $\Delta E$ und der Entropieänderung, $\Delta S$ zu $\Delta E = T\Delta S$. Um somit Kühlschränke mit hoher Effizienz realisieren zu können, werden Materialien mit hohem $\Delta E$ und somit hohem $\Delta S$ benötigt. Interessanterweise lässt sich zeigen, dass magnetokalorische Materialien und Shape-Memory Legierungen, die für Kühlschränke optimiert werden, auch hervorragende Eigenschaften für die vorgeschlagene Erfindung als Sensor haben. Dies lässt sich aus der Maxwell Relation zeigen, die einen Zusammenhang der Entropieänderung mit dem externen Feld H und der Magnetisierung als Funktion der Temperatur T liefert. Die Maxwell Relation gibt:

$$\left(\frac{\partial S}{\partial H}\right)_{T,P} = \left(\frac{\partial M}{\partial T}\right)_{H,P}.$$

Um die magnetische Kühlung zu maximieren, muss die Entropieänderung mit der Feldänderung maximiert werden. Daraus ergibt sich gleichzeitig, dass genau das maximiert wird, was für den vorgeschlagenen Sensor benötigt wird, nämlich die Änderung der Magnetisierung als Funktion der Temperatur. Die Temperatur, die bei einer kleinen Änderung der Temperatur zu einer maximalen Magnetisierungsänderung führt, wird kritische Temperatur $T_c$ genannt. Diese kritische Temperatur konnte bei magnetokalorischen Materialien und Shape-Memory Legierungen erst in den letzten Jahren auf Raumtemperatur gehoben werden.

Die vorgeschlagenen Sensoren können drahtlos ausgelesen werden. Bei der Verwendung als Kühlkettenüberwachungssensoren haben sie den weiteren Vorteil, dass sie im Unterschied zu anderen gebräuchlichen Temperaturindikatoren nicht schon im gekühlten Zustand geliefert werden. Die Sensoren können vor Ort nach dem Tiefkühlen aktiviert werden (z.b durch mechanische Spannungen, magnetische Felder und tiefen bzw. hohen Temperaturen). Dies spart Energie und Kosten. Der Sensor ist ein passives Element, das weder eine eigene Energieversorgung noch sonstige elektronische Elemente benötigt.

Gemäß einem Ausführungsbeispiel der Erfindung kann das Sensormaterial auf Basis einer der Legierungen $Gd_5(Si_{1-x}Ge_x)_4$, Ni-Mn, Ni-Mn-Ga, Ni-Mn-In-(Co), La-Fe-Si, La-Fe-Si-Co, La-Fe-Si-Co-B, , La-Fe-Si-Cu, La-Fe-Si-Ga, La(Fe, Si,Co), $LaFe_xSi_{1-x}$, $La(Fe, Si)_{13}$, $RCo_2$ mit R aus (R=Dy,Ho, Er), $DyAl_2$, $DyNi_2$ Tb-Gd-Al, Gd-Ni, Mn-As-Sb, MnFe-P-As ausgebildet sein.

Eine weitere Ausgestaltung der Erfindung kann die folgenden wesentlichen Bestandteile des Sensors enthalten:

(i) Ein magnetostriktives Resonatorplättchen, dessen Resonanzfrequenz von dem angelegten Magnetfeld abhängt;
(ii) Ein magnetisches Bias-Plättchen mit einem Phasenübergang erster Ordnung, das zu einem Großteil aus einem magneto-kalorischen Material oder einer Shape-Memory Legierung besteht, dessen Magnetisierung und in Folge das erzeugte Streufeld in der Nähe der kritischen Temperatur stark geändert wird, und
(iii) optional ein permanentmagnetisches Plättchen (Permanentmagnet), um den Arbeitspunkt des Sensors einzustellen.

Das Resonatorplättchen besteht aus einem magnetostriktiven Material, das in einer Schutzhülle so eingebracht ist, dass das Plättchen mechanisch frei schwingen kann. Magnetostriktive schwingende Plättchen an sich werden in der Diebstahls-Sicherungstechnologie, siehe Ref [3], in Bibliotheken oder in Kaufhäusern verwendet. Magnetostriktive Plättchen wurden bereits zur Bestimmung von Temperatur, Druck nämlich Druck in Fluiden und zur Verwendung für biologische und chemische Sensoren vorgeschlagen, siehe Ref [4] und Ref [5]. Ein magnetostriktives Element ändert seine geometrische Ausdehnung als Funktion des angelegten Magnetfeldes. Somit kann durch einen magnetischen Feldpuls das Plättchen gedehnt werden. Der Feldpuls kann beispielsweise mit einer Sendespule, die in die Nähe des Resonatorplättchens gehalten wird, erzeugt werden. Nach Abschalten des Feldes schwingt das ausgedehnte Sensorelement zurück. Die Schwingungsfrequenz bzw. Resonanzfrequenz ist für den magnetischen Sensor charakteristisch und hängt von dem angelegten Magnetfeld oder auch Temperatur ab. Das mechanisch schwingende Resonatorplättchen sendet, wieder auf Grund des Effekts der Magnetostriktion, ein magnetisches Wechselfeld aus. Dieses Magnetfeld kann mit einem Magnetfeldsensor z.B. einer Spule berührungsfrei detektiert werden. Das Signal des Sensors kann noch 1-2 m entfernt vom Magnetfeldsensor empfangen werden.

Das Biasplättchen besteht aus einem Material, das wie oben diskutiert eine starke Magnetisierungsänderung in der Nähe der kritischen Temperatur zeigt. Durch die starke Magnetisierungsänderung ändert sich das magnetische Streufeld, das das Biasplättchen auf das Resonatorplättchen ausübt. Konsequenterweise ändert sich dadurch die Resonanzfrequenz des Resonatorplättchens. Aus der Änderung der Resonanzfrequenz kann somit auf die Temperatur und bei einer speziellen Ausgestaltung des Biasplättchens auch auf die Überschreitung bzw. Unterschreitung einer kritischen Temperatur geschlossen werden.

Der Permanentmagnet wird benötigt, um den Arbeitspunkt des Sensors einzustellen. Trotz dieser praktischen Bedeutung ist er für das der Erfindung zugrundeliegende Konzept nicht so wichtig. Sowohl das Resonatorplättchen als auch das Biasplättchen benötigen meist ein gewisses äußeres Feld, um die gewünschte Funktionalität zu zeigen.

Durch die Anordnung von mehreren Sensoren lässt sich der Einfluss des Erdmagnetfeldes auf das Signal kompensieren.

Die Bestandteile des Sensors der erfindungsgemäßen Sensorvorrichtung können in verschiedenster Form, z.B. als Plättchen realisiert sein, wobei die Bezeichnung "Plättchen" wegen der naheliegenden Form dieser Bauteile verwendet wird, ohne dass es notwendig wäre, diese wirklich so auszubilden. So können die Materialien beispielsweise auch in Drahtformen realisiert werden.

Nachstehend sind Beispiele für geeignete Materialien zum Aufbau eines erfindungsgemäßen Sensors angegeben.

**Resonatorplättchen:** Magnetostriktives Material. Kann z.B. ein amorphes Plättchen sein. Legierungen die Fe, Co, Ni, Tb, Cu, Dy, Pd, B, P, C bzw. Gd enthalten sind möglich. Es kann auch ein nanokristallines Plättchen sein mit Korngrößen zwischen 1nm und 1 Mikrometer und Tb, Dy, Fe, Co, Ni, B, P, C, Gd, Si, B, Nb bzw. Mo enthalten.

**Permanentmagnetisches Plättchen:** Ist ein Permanentmagnet und dient zum Einstellen des Arbeitspunktes. Brauchbar sind beispielsweise Alnico Magnete, Legierungen auf der Basis von Fe-Oxid, Barium/Stronium-Carbonate, Ticonal, Verbindungen, die Sm, Ni, Co, Nd, Fe bzw. B enthalten.

**Biasplättchen:** Ein Material mit einem Phasenübergang erster Ordnung, z.B. ein magnetokalorisches Material oder eine Shape-Memory Legierung, dessen bzw. deren Magnetisierung und in Folge dessen bzw. deren Streufeld in der Nähe der kritischen Temperatur stark geändert wird.

Mit Überschreitung einer kritischen Temperatur können sowohl bei magnetokalorischen Materialien als auch bei Shape-Memory Legierungen die folgenden Übergänge beobachtet werden:

(i) Zustand mit hoher Magnetisierung zu Zustand mit niedriger Magnetisierung

(ii) Zustand mit niedriger Magnetisierung zu Zustand mit hoher Magnetisierung

Bei magnetokalorischen Materialien sind diese Phasenübergänge oft reversibel. Das heißt, wird die kritische Temperatur nach der Überschreitung wieder unterschritten ist der magnetische Zustand des Plättchens der gleiche beziehungsweise sehr ähnlich wie der Ausgangszustand. Solch eine reversible Magnetisierungsänderung ist geeignet um Temperatursensoren für die Bestimmung der momentanen Temperatur mit hoher Auflösung in der Nähe der kritischen Temperatur zu realisieren. So kann beispielsweise, für Fieberthermometer eine hohe Auflösung im Bereich von 35°C bis 42°C erreicht werden. Magnetokalorische Materialien können verwendet werden, die eine starke Änderung der Magnetisierung in diesem Temperaturbereich zeigen. Die kritische Temperatur kann beispielsweise bei 45°C liegen.

Reversible Magnetisierungsänderung ist jedoch für die Detektion einer Maximal/Minimaltemperatur nicht geeignet. Vielmehr sind für Maximal/Minimaltemperatur Sensoren, magnetische Materialien benötigt, die nach Überschreitung der kritischen Temperatur zu einer irreversiblen Änderung des magnetischen Zustandes führen oder zumindest eine beträchtliche thermische Hysterese zeigen, die oft bei Shape-Memory Legierungen zu finden ist. Möglichkeiten um magnetokalorische Materialien mit irreversiblen Magnetisierungskurven zu realisieren werden bei der Diskussion der beigeschlossenen Figuren angegeben.

Der Begriff thermische Hysterese sollte an folgendem Beispiel illustriert werden. Bei der Shape-Memory Legierung Ni-Mn-In-Co erfolgt beispielsweise ein Übergang von niedriger Magnetisierung zu hoher Magnetisierung, wenn eine Temperatur von 7°C überschritten wird. Bei erneuter Abkühlung ist jedoch die Unterschreitung von -33°C erforderlich um wieder in den Zustand mit niedriger Magnetisierung zu wechseln. In diesem Fall ist die thermische Hysteresis 40°C und ausreichend, um eine zumindest einmalige Temperaturerhöhung über 7°C dauerhaft zu detektieren. Erst wenn der Sensor auf -33°C gekühlt wird, wird der Sensor in den Ausgangszustand zurückgesetzt.

Ein Beispiel für ein Material, das in einem Temperatursensor für die Detektion einer kritischen Maximaltemperatur verwendet kann, ist NiMnGa. Die kritische Temperatur, bei der die martensitische Umwandlung stattfindet, kann durch Wahl der Legierung im Bereich von 175K zu 450K liegen [6]. Unterhalb der kritischen Temperatur ist NiMnGa in einer tetragonalen Phase, die bei geeigneter Wahl der Korngröße auch eine genügend große kristalline Anisotropie besitzt, um hartmagnetische Eigenschaften aufzuweisen. Im speziellen kann eine Remanenz ungleich Null realisiert werden, wenn das Plättchen bei der Aktivierung durch ein äußeres Feld gesättigt wird. Somit wirkt von diesem Plättchen ein Streufeld auf das Resonatorplättchen und stellt eine bestimmte Resonanzfrequenz des Resonatorplättchens ein. Wird nun der Sensor über die kritische Temperatur erwärmt, findet ein Phasenübergang statt, die tetragonale Phase geht in eine kubische Phase über und die mittlere Magnetisierung verschwindet. Bei erneuter Abkühlung kann zwar wieder die tetragonale Phase erreicht werden, jedoch würde während der Abkühlung ein beträchtliches Feld benötigt werden, um einen magnetischen Zustand mit einer Magnetisierung ungleich Null zu erreichen. Somit wird bei einmaliger Überschreitung der kritischen Temperatur die mittlere Magnetisierung des Biasplättchens nahe Null gesetzt. In Folge erzeugt das Biasplättchen kein Streufeld und die Resonanzfrequenz des Resonatorplättchen ist unterschiedlich als bei gesättigtem Biasplättchen. Durch die Änderung der Resonanzfrequenz kann die einmalige Erwärmung über die kritische Temperatur festgestellt werden.

Anstatt das Plättchen durch Abkühlen zu aktivieren kann auch die Aktivierung durch mechanische Spannungen vorgenommen werden.

In einer weiteren Ausgestaltung des Sensors wird der Phasenübergang des magnetokalorischen Materials nicht mittels resonanter Schwingungen detektiert sondern über die Änderung der Form der Hysteresekurve bestimmt. Dies kann beispielsweise realisiert werden, indem ein oder mehrere magnetokalorische bzw. Shape-Memory Plättchen mit weichmagnetischen Elementen wechselwirken oder diese Plättchen selbst weichmagnetische Eigenschaften aufweisen und somit eine starke Änderung der Permeabilität mit der Temperatur zeigen.

Ändert sich die Magnetisierung des magnetokalorischen bzw. Shape-Memory Plättchens wird der Entmagnetisierungsfaktor der umliegenden weichmagnetischen Partikeln bzw Elemente verändert. Ist andererseits das magnetokalorischen bzw. Shape-Memory Plättchen selbst weichmagnetisch ändert sich der Entmagnetisierungsfaktor dieses Plättchens und es werden keine weiteren weichmagnetischen Elemente für die Temperaturdetektion benötigt. Diese Änderung des Entmagnetisierungsfaktors spiegelt sich in einer Änderung der Hysteresekurve wieder. Diese Änderung der Form der Hysteresekurve kann durch Analyse der harmonischen Schwingungen bei Anlegen eines nichtkonstanten Wechselfeldes analysiert werden [7]. Dabei werden die weichmagnetischen Elemente durch ein beispielsweise sinusförmige Wechselfeld ständig ummagnetisiert und in Sättigung getrieben. Da die Permeabilität des Materials in der Sättigung um einige Grössenordnungen kleiner ist als im zentralen Teil der Hysteresekurve ist die resultierende Magnetisierungsänderung bzw. die in den Empfänger induzierte Spannung kein reiner Sinus mehr. Der Oberwellenanteil (zB.: zweite harmonische Schwingung) kann zur Messung des Sättigungsfeldes, welches vom Entmagnetisierungsfaktor abhängt, herangezogen werden. Dadurch kann auf die Temperatur geschlossen werden.

In einer weiteren Ausgestaltung des Sensors kann das Sensorelement sowohl als magnetokalorisches Element zur Detektion der Temperatur als auch als weichmagnetisches Sendeelement fungieren. Als Materialbeispiel sei $La(Fe_xSi_{1-x})_{13}$ genannt das eine kolossale lineare Magnetostriktion besitzt, magnetokalorisch ist und weichmagnetische Eigenschaften besitzt. Die kritische Temperatur kann mit der Si Konzentration von 185K (1.3% Si) auf 250K (2.5% Si) erhöht werden. Somit lässt sich ein Sensor für verschiedene Anwendungstemperatur entwickeln. Ein periodisches magnetisches Feld kann ein $La(Fe_xSi_{1-x})_{13}$ Element zur mechanischen Schwingung anregen. Nach Abschalten des Feldes schwingt das Element bis zu einigen Millisekunden weiter und sendet auf Grund des Villari Effektes ein magnetisches Feld aus. Da die magnetischen Eigenschaften Nahe der kritischen Temperatur stark geändert werden, ändert sich auf Grund des ΔE Effektes die mechanische Eigenfrequenz stark als Funktion der Temperatur. Somit kann ein $La(Fe_xSi_{1-x})_{13}$ Plättchen nahe der kritischen Temperatur als Temperatursensor mit hoher Genauigkeit verwendet werden. Als Anwendungsbeispiel sei zum Beispiel ein drahtloses Messgerät für die Bestimmung der Körpertemperatur von Menschen oder Versuchstieren genannt. Um den Arbeitspunkt des Sensors einzustellen ist für die meisten Sensoranwendungen ein weiteres magnetisches Element benötigt das ein Biasfeld erzeugt. Anstatt des magnetokalorischen Elements $La(Fe_xSi_{1-x})_{13}$ kann zum Beispiel auch die Shape Memory Legierung Ni-Mn-In-Co zum Einsatz kommen.

Die Erfindung wird im Folgenden anhand von in den Zeichnungen dargestellten Ausführungsbeispielen näher erläutert. Es zeigt dabei

Fig.1 eine schematische Schrägrissdarstellung eines Sensors einer Ausführungsform der erfindungsgemäßen Sensorvorrichtung unterhalb der kritischen Temperatur;

Fig. 2 zeigt den Sensor gemäß Fig.1 oberhalb der kritischen Temperatur;

Fig. 3 eine schematische Schrägrissdarstellung eines Sensors einer weiteren Ausführungsform der erfindungsgemäßen Sensorvorrichtung unterhalb der kritischen Temperatur;

Fig. 4 zeigt den Sensor gemäß Fig.3 oberhalb der kritischen Temperatur;

Fig.5 eine schematische Schrägrissdarstellung eines Sensors einer weiteren Ausführungsform der erfindungsgemäßen Sensorvorrichtung unterhalb der kritischen Temperatur;

Fig.6 den Sensor gemäß Fig.5 oberhalb der kritischen Temperatur;

Fig.7 zeigt eine vergrößerte Darstellung eines Partikels des magnetokalorischen Materials, welches im Sensor gemäß Fig.5 Anwendung findet;

Fig.8 zeigt eine Hysteresekurve für Partikel aus Fig. 7;

Fig.9 bis 12 zeigen eine schematische Darstellung eines Sensors einer weiteren Ausführungsform der erfindungsgemäßen Sensorvorrichtung in verschiedenen Zuständen; Realisierung eines irreversiblen Magnetisierungsprozesses durch nanokristalline Materialien;

Fig.13 zeigt ein Diagramm, aus dem die Reduktion des Schaltfeldes als Funktion der Größe (Korndurchmesser = t) der weichmagnetischen Einschlüsse hervorgeht;

Fig.14 zeigt eine schematische Schrägrissdarstellung eines Sensormaterials einer weiteren Ausführungsform der erfindungsgemäßen Vorrichtung in Form von vorstrukturierten Filmen für die Erzeugung von magnetokalorischen Materialien mit Formanisotropie;

Fig. 15 zeigt eine Aufsicht von Fig.14

Fig. 16 zeigt ein Diagramm Magnetisierung in Abhängigkeit von der Temperatur, aus dem der irreversible Übergang von magnetisch zu unmagnetisch bei kritischer Temperatur ersichtlich ist.

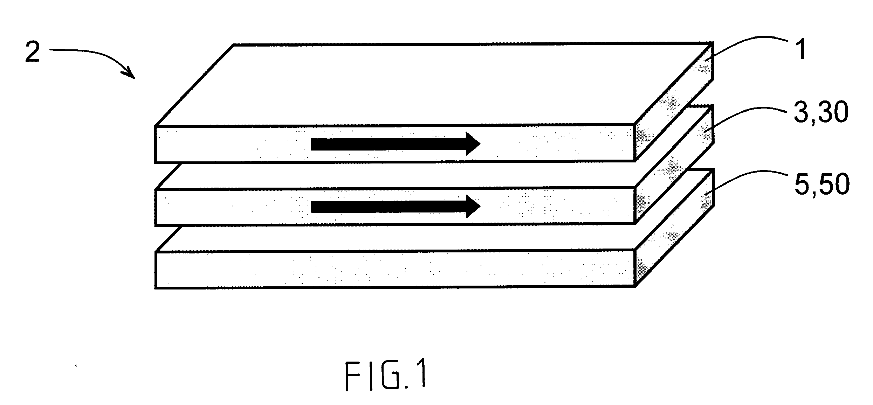

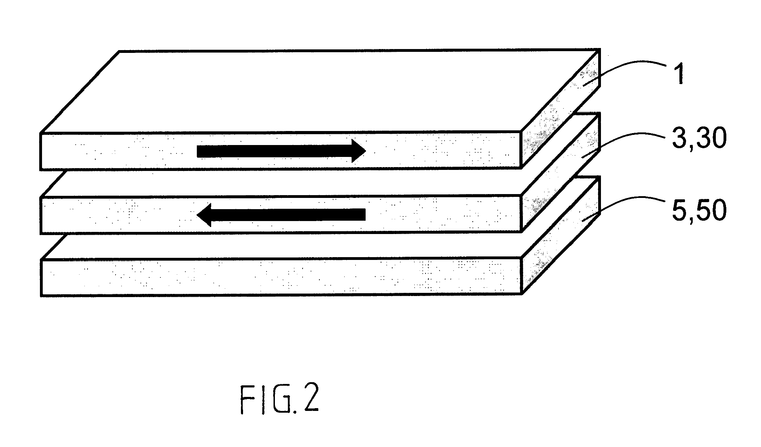

Fig.1 und Fig.2 zeigen ein Ausführungsbeispiel einer erfindungsgemäßen Sensorvorrichtung mit einem Sensor 2, der in einem nicht dargestellten Gehäuse oder Schutzhülle aufgenommen und aus drei planparallelen Plättchen 1, 30, 50 gebildet ist, wobei eines der Plättchen ein Permanentmagnet 1 ist, der ein statisches Magnetfeld erzeugt und für die Einstellung des Arbeitspunktes des Sensors 2 notwendig ist. Ein weiteres Plättchen ist ein Resonatorplättchen 50 aus einem weichmagnetischen Material 5, das im dargestellten Ausführungsbeispiel ein magnetostriktives Plättchen, z.B. aus $Fe_{24}Co_{12}N_{46}Si_2B_{16}$ ist, dessen mechanische Resonanzfrequenz von den Umgebungsbedingungen, wie beispielsweise externe Magnetfelder abhängt.

Weiters ist das dritte Plättchen ein Biasplättchen 30 aus einem Sensormaterial 3, z.B. aus $Ni_{45}Mn_{36.7}In_{13.3}Co_5$, welches aus einer magnetokalorischen Legierung und/oder einer Shape-Memory-Legierung gebildet ist, die bei einer kritischen Temperatur einen Phasenübergang erster Ordnung zeigen.

Das Biasplättchen 30 kann auch aus einem anderen Sensormaterial gebildet sein, das bei einer kritischen Temperatur einen Phasenübergang erster Ordnung durchläuft.

Die erfindungsgemäße Sensorvorrichtung enthält zusätzlich zum Sensor 2 eine nicht dargestellte Vorrichtung zur Erzeugung eines zeitveränderlichen magnetischen Feldes im Sensor 2, z.B. eine Sendespule, und einen nicht dargestellten Detektor, z.B. eine Empfangsspule, mit dem das vom Sensor 2 ausgesandte Magnetfeld detektierbar ist.

Als Antwort auf das von außen aufgeprägte, zeitveränderliche Magnetfeld zeigt das weichmagnetische Material des Resonatorplättchens 50 eine periodisch veränderliche Magnetisierung, welche vom Detektor zur Identifikation der Temperatur detektiert wird.

Die Verbindung zwischen den einzelnen Plättchen 1, 30, 50 ist nicht näher dargestellt, es sollte das Resonatorplättchen 50 möglichst lose angeordnet sein oder so eingespannt werden, um in seiner Deformation durch das Magnetfeld nicht bzw. kaum behindert zu werden. Die jeweilige tatsächliche Anordnung der Plättchen 1, 30 und 50 kann von der in der Fig. 1 dargestellten Weise abweichen. So können z.B. die Plättchen 1, 30 und 50 vertauscht angeordnet sein.

Die nicht dargestellte Schutzhülle, in die der Sensor 2 eingebettet ist, kann aus den unterschiedlichsten Materialien bestehen. Einbettung in ein magnetisches Material kann den Vorteil haben, dass das Erdmagnetfeld im Inneren reduziert wird, jedoch werden die Sensorsignale ebenfalls stark gedämpft. Kunststoffe wie Thermoplaste, Duroplaste, Elastomere sind besonders bevorzugt. Bei Hochtemperaturanwendungen können feuerfeste Keramiken wie Verbindungen von Silicat-Rohstoffen, Verbindungen auf der Basis von Magnesit, Si-Oxide, Aluminiumoxid, Siliciumcarbid, Bornitrid, Zirkonoxid, Siliziumnitrid, Aluminiumnitrid, Wolframcarbid und Aluminiumtitanat verwendet werden.

Der Sensor 2 kann als irreversibler Sensor (zur Bestimmung der Unterschreitung / bzw. Überschreitung von kritischen Temperaturen) als auch als reversibler Temperatursensor (Messung der momentanen Temperatur) bereitgestellt sein.

Soll die Über bzw. Unterschreitung einer kritischen Temperatur angezeigt werden, muss nach Überschreitung/Unterschreitung der kritischen Temperatur eine irreversible Magnetisierungsänderung im Biasplättchen 30 stattfinden. Dadurch erzeugt das Biasplättchen 30 nach der Überschreitung/Unterschreitung auf Grund des geänderten magnetischen Zustands ein unterschiedliches Magnetfeld, welches auf das weichmagnetische Material des Resonatorplättchen 50 wirkt. Dadurch ändert sich die Resonanzfrequenz des Resonatorplättchens 50, welche zur Identifikation einer Überschreitung/Unterschreitung der kritischen Temperatur dient. Die nach Überschreiten der kritischen Temperatur eingetretene geänderte Magnetisierung des Biasplättchens 30 ist in Fig.2 schematisch dargestellt.

Andererseits kann der Sensor 2 auch zur Messung der momentanen Temperatur dienen. In diesem Fall wird als Biasplättchen 30 ein magnetokalorisches Material, z.B. $La_{0.925}Na_{0.075}MnO_3$ verwendet, das bei Überschreitung/Unterschreitung der kritischen Temperatur seine Magnetisierung reversibel ändert.

Durch die starke Änderung der Magnetisierung in der Nähe der kritischen Temperatur hat die erfindungsgemäße Sensorvorrichtung eine hohe Genauigkeit in diesem Temperaturbereich.

Wird das magnetokalorische $La(Fe_xSi_{1-x})_{13}$ als Sensormaterial verwendet, kann das zusätzliche weichmagnetische Material 5 weggelassen werden, da $La(Fe_xSi_{1-x})_{13}$ selbst weichmagnetisch ist und eine große Magnetostriktion besitzt.

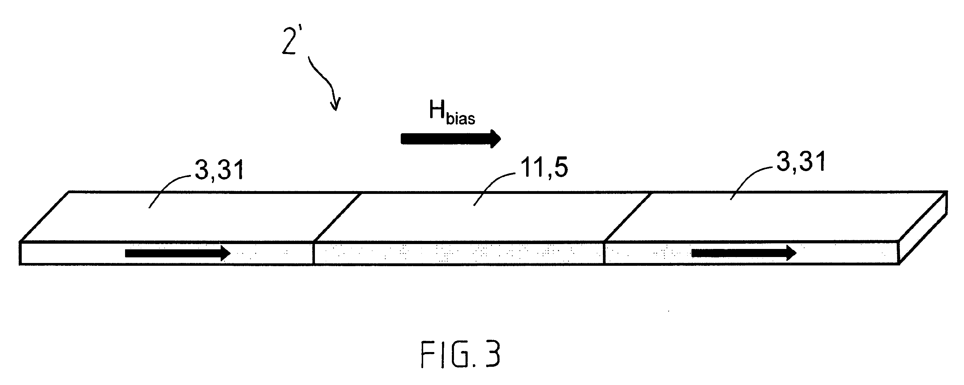

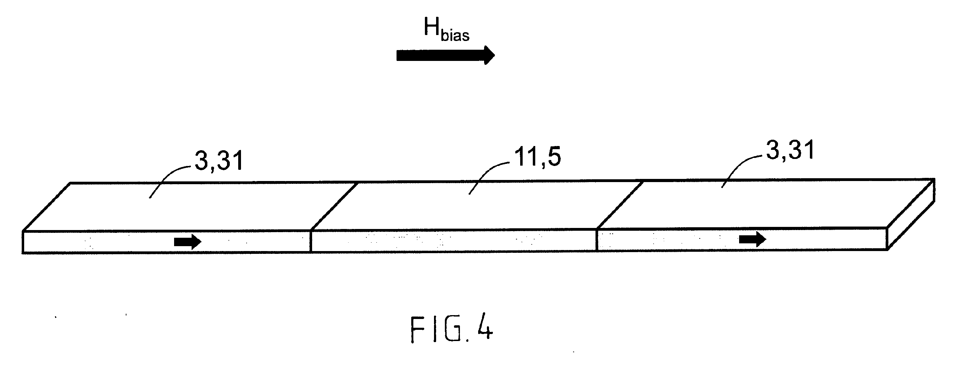

Fig. 3, 4 zeigen ein weiteres Ausführungsbeispiel der erfindungsgemäßen Sensorvorrichtung, mit der Temperatur gemessen wird. In diesem Fall enthält die erfindungsgemäße Sensorvorrichtung kein mechanisch schwingendes Element.

An ein Element aus weichmagnetischem Material 5, das als Plättchen 11 ausgeführt ist, sind an dessen Stirnseiten jeweils plättchenförmige Elemente 31 aus einem magnetokalorischen Sensormaterial 3 oder aus einem Sensormaterial mit einem Phasenübergang erster Ordnung, z.B. $La_{0.65}Nd_{0.05}Ca_{0.30}Mn_o$ angefügt, welche zusammen den Sensor 2' bilden.

Wird nun unterhalb der kritischen Temperatur ein magnetisches Wechselfeld entlang der Längsrichtung des Sensors 2' angelegt, kann dieser leicht magnetisiert werden, da der Sensor 2' nur ein kleines Entmagnetisierungsfeld aufweist (Fig.3).

Bei einer Erhöhung der Temperatur verliert das magnetokalorische Sensormaterial 3 des Elements 31 seine Magnetisierung (Fig.4) bzw. wird sie stark verringert. Dadurch erhöht sich der Entmagnetisierungsfaktor des weichmagnetischen Elements 11 und es werden größere Felder benötigt, um den Sensor 2' zu magnetisieren. Durch Analyse von Oberschwingungen (z.B. der zweiten harmonischen Schwingung) kann die Änderung des Entmagnetisierungsfaktors bestimmt werden. Dadurch kann auf die Temperatur geschlossen werden.

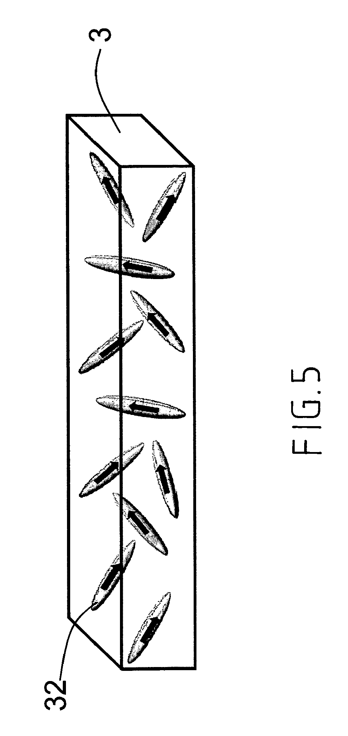

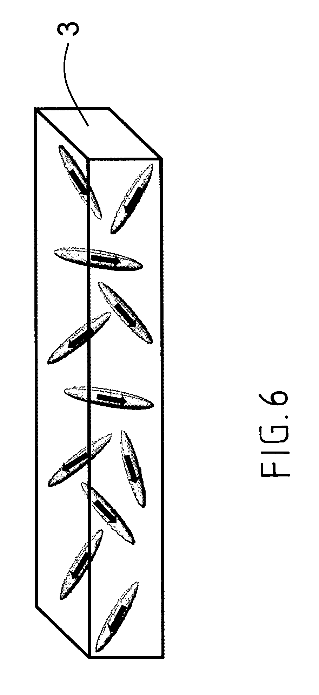

Fig.5 und 6 zeigen ein Ausführungsbeispiel der Erfindung, in dem als Sensormaterial 3 ein Material mit magnetokalorischen Partikeln 32 verwendet ist, um eine irreversible Streufeldänderung bei Überschreitung/Unterschreitung einer kritischen Temperatur zu realisieren.

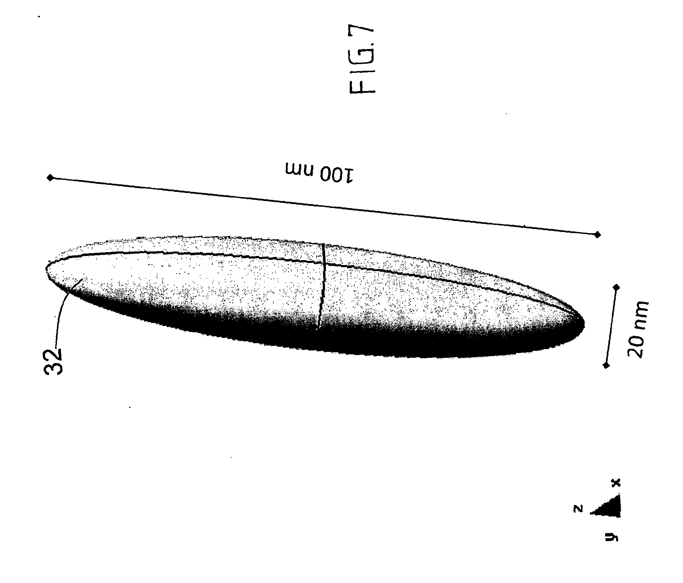

Unterhalb der kritischen Temperatur sind alle Partikel 32 des Sensormaterials 3 nach rechts gesättigt. Dieser Zustand ist auch stabil, da jedes Partikel 32 eine Formanisotropie besitzt. Ein solches Partikel ist in Fig.7 im Detail dargestellt. Das Achsenverhältnis ist 100:20.

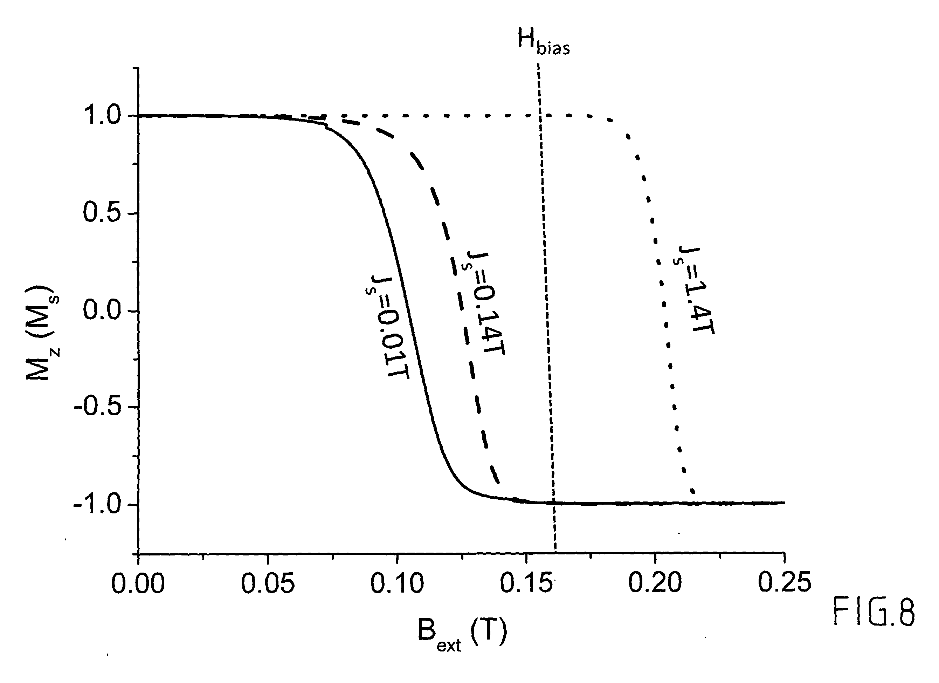

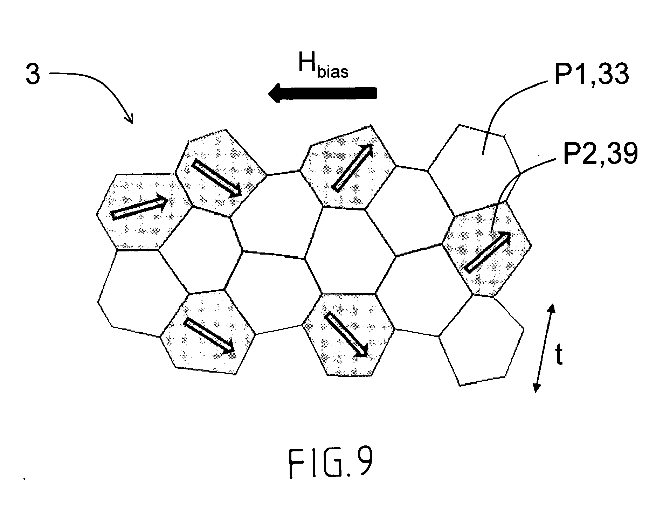

Für solch ein Partikel ist die Hysteresekurve als Funktion der Sättigungsmagnetisierung in Fig.8 dargestellt. Für das beschriebene Ausführungsbeispiel ist angenommen, dass die Magnetisierung des magnetokalorischen Sensormaterials 3 bei tiefen Temperaturen (< -6°C) $J_s$=1.14 Tesla ist. Für diese Magnetisierung besitzt das Partikel 32 eine beträchtliche Formanisotropie. Als Folge besitzt das Partikel 32 ein relativ hohes Koerzitivfeld von 0.2 Tesla. Wird nun das Sensormaterial 3 erwärmt sinkt die Magnetisierung. Bei einer Magnetisierung von 0.01 T ist das Koerzitivfeld nur noch 0.1 Tesla. Ein Biasfeld $H_{Bias}$ von 0.16 Tesla kann somit im erwärmten Zustand die Partikel - 32 ummagnetisieren. Somit ist eine irreversible Änderung der Magnetisierung im magnetokalorischen Sensormaterial 3 eingetreten. Ein solches Material eignet sich beispielsweise für die Detektion einer Überschreitung einer kritischen Temperatur. Fig. 9 bis 12 zeigen eine weitere Möglichkeit, irreversible Magnetisierungszustände in einer erfindungsgemäßen Sensorvorrichtung im Sensormaterial 3 zu realisieren.

Im Verwendungsfall ist das in Fig.9 bis 12 gezeigte Sensormaterial 3 wie z.B. in Fig.1 und 2 gezeigt mit anderen Elementen, z.B. einem Resonatorplättchen und einem Permanentmagnet kombiniert, um eine Temperaturdetektion zu ermöglichen.

Magnetokalorische Körner 33 (p1) sind zu hartmagnetischen Körner 39 (p2) austauschgekoppelt. Anfänglich sind die hartmagnetischen Körner 39 nach rechts ausgerichtet. Ein Biasfeld Hbias ist nach links angelegt, das nicht ausreichend groß ist, um die hartmagnetischen Körner umzumagnetisieren. Bei tiefen Temperaturen besitzt das magnetokalorische Material 3 keine Magnetisierung.

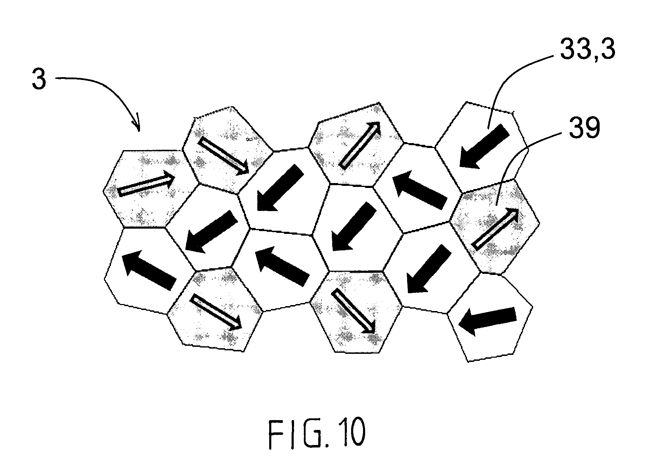

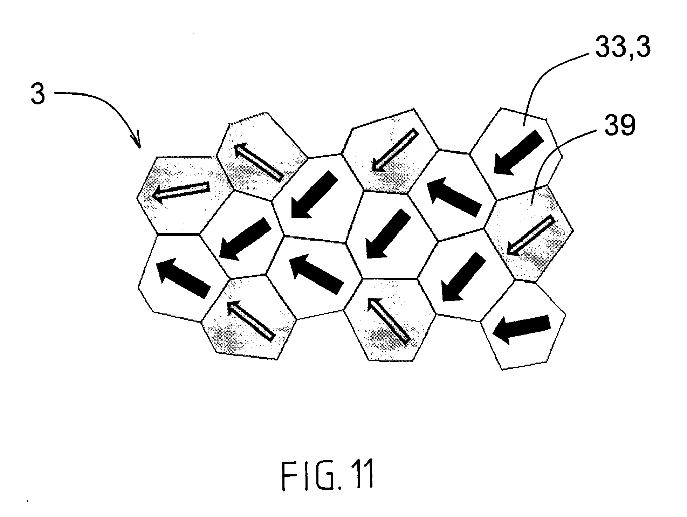

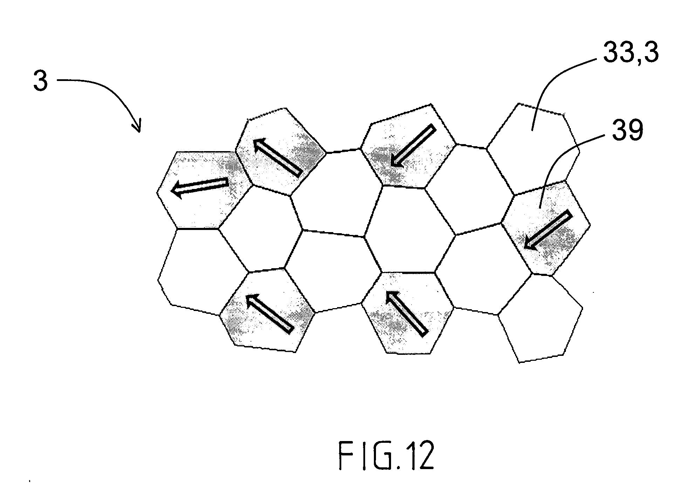

Wird nun der Sensor erwärmt steigt die Magnetisierung des magnetokalorischen Materials 3 an (Fig. 10). Die Magnetisierung der magnetokalorischen Körner 33 wirkt wie ein Hebel auf die hartmagnetischen Körner 39 und unterstützt die Magnetisierung der Körner [8]. Das Biasfeld kann mithilfe des magnetokalorischen Materials 3 nun die hartmagnetischen Körner 39 ummagnetisieren (Fig.11). Auch bei einer Absenkung der Temperatur wird der anfängliche magnetische Zustand nicht wieder hergestellt (Fig.12). Dieses Material eignet sich ebenfalls für die Detektion einer Maximaltemperatur.

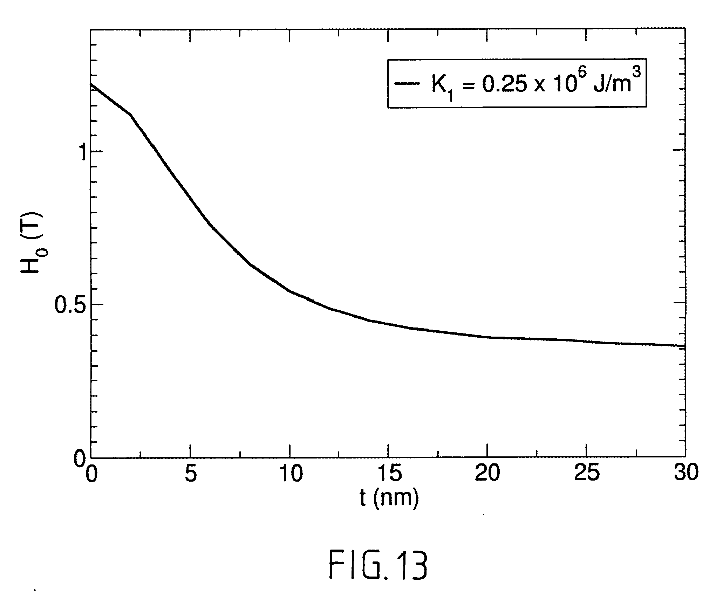

Fig. 13 zeigt das benötigte Ummagnetisierungsfeld von hartmagnetischen Körnern 39, wenn diese zu magnetokalorischen Körnern 33 mit Durchmesser (t) austauschgekoppelt sind. Es zeigt sich, wenn die magnetokalorischen Körner 33 (p1) einen Durchmesser von t>20 nm haben, dass das Koerzitivfeld um einen Faktor 4 reduziert wird.

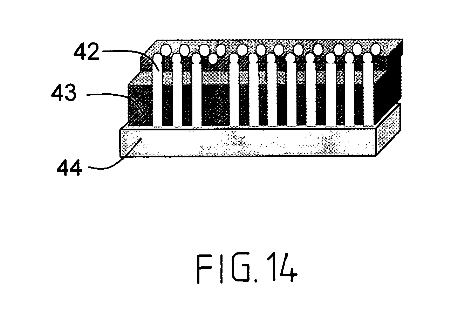

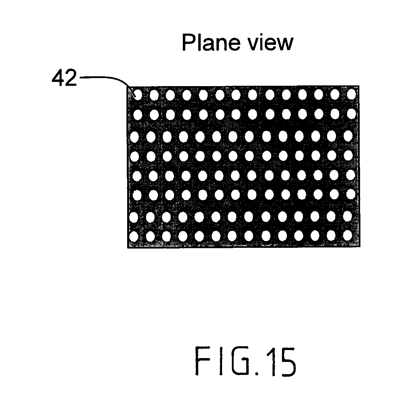

Fig.14 und 15 zeigen ein Ausführungsbeispiel der erfindungsgemäßen Sensorvorrichtung, bei dem magnetokalorisches Material mit einer Formanisotropie hergestellt ist. Die Formanisotropie entsteht durch die längliche Form der Löcher, wenn der Zylinderdurchmesser kleiner als die Zylinderhöhe ist. Auf ein SiliziumSubstrat 44 wird Aluminium 43 aufgedampft. Durch Anodisation können Löcher 42 mit verschiedenen Durchmessern und Dichten erzeugt werden [9]. Diese Löcher 42 können in einem zweiten Schritt mit magnetokalorischem Material gefüllt werden.

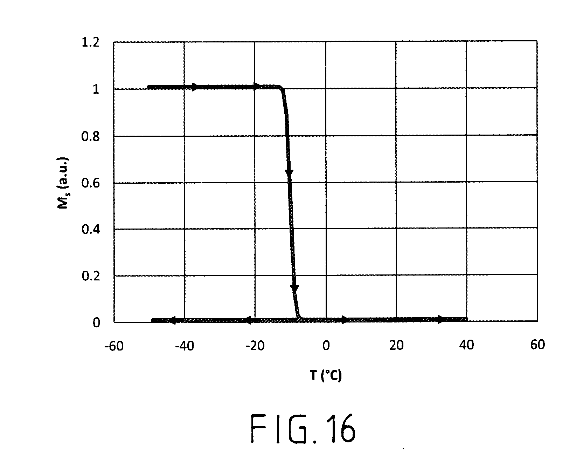

Fig.16 zeigt schematisch die irreversible Änderung der Sättigungsmagnetisierung als Funktion der Temperatur bei der Phasenumwandlung von Martensit (ferromagnetisch) zu Austenit (nicht ferromagnetisch) die bei Shape-Memory Legierungen stattfindet. Die beiden offenen Zweige der Magnetisierung bei niedrigen Temperaturen können offen bleiben (irreversible) oder wieder geschlossen werden (thermische Hysterese). Das irreversible Verhalten der Sättigungsmagnetisierung zeigt, dass Shape-Memory Legierungen als Sensormaterial 3 eingesetzt werden können, um die Überschreitung einer kritisch Temperatur zu detektieren.

Die Erfindung ist nicht auf die dargestellten und beschriebenen Ausführungsbeispiele beschränkt, sondern kann verschiedentlich abgewandelt werden. Wesentlich ist, dass die Temperaturmessung auf eine starke Änderung der Magnetisierung zurückgeführt wird. Der Sensor kommt ohne eigene Energieversorgung aus und die für den Messvorgang nötige Energie ebenso wie das Messergebnis, so wie oben beschrieben, berührungslos übertragen wird.

Es sind auch unterschiedliche Kombinationen der gezeigten und beschriebenen Elemente möglich und es können in Zukunft selbstverständlich auch neue Materialien, die die angeführten Eigenschaften besitzen, verwendet werden, auch wenn unter Umständen deren Benennung nicht mit der derzeit üblichen übereinstimmt. Der Grund für diese explizite Feststellung ist, dass sich gerade die Materialwissenschaften in rascher Entwicklung befinden und daraus keine Einschränkung des Schutzes abgeleitet werden soll.

Als Literatur zum Stand der Technik sei genannt:

[1] "StateMaster - Encyclopedia: Curie temperature, http://www.statemaster.com/encyclopedia/Curie-temperature."

[2] C. Zimm, A. Jastrab, A. Sternberg, V. Pecharsky, K. GSCHNEIDNER, M. Osborne, and I. Anderson, "Description and performance of a near-room temperature magnetic refrigerator," Advances in cryogenic engineering, vol. 43, 1998, pp. 1759-1766.

[3] G. Herzer, "Der große Lauschangriff auf Ladendiebe," Physikalische Blaetter, vol. 57, 2001, pp. 43-48.

[4] K. Zeng and C.A. Grimes, "Wireless Magnetoelastic Physical, Chemical, and Biological Sensors," IEEE Transactions on Magnetics, vol. 43, 2007, pp. 2358-2363.

[5] D. Walker, "Magnetoacoustic sensor system and associated method for sensing environmental conditions," U.S. Patent WO 03091679 A1, November 6, 2003.

[6] Y. Ma, S. Awaji, K. Watanabe, M. Matsumoto, and N. Kobayashi, "Effect of high magnetic field on the two-step martensitic-phase transition in NiMn-Ga," Applied Physics Letters, vol. 76, 2000, p. 37.

[7] R. Fletcher and N. Gershenfeld, "Wireless monitoring of temperature," U.S. Patent 6208253, March 27, 2001.

[8] D. Suess, T. Schrefl, S. Fahler, M. Kirschner, G. Hrkac, F. Dorfbauer, and J. Fidler, "Exchange spring media for perpendicular recording," Applied Physics Letters, vol. 87, Jul. 2005, pp. 012504-3.

[9] M.T. Rahman, N.N. Shams, Y.C. Wu, C.H. Lai, and D. Suess, "Magnetic multilayers on porous anodized alumina for percolated perpendicular media," Applied Physics Letters, vol. 91, 2007, p. 132505.

**Patentansprüche**

1. Sensorvorrichtung mit einem Sensor (2, 2') zur Bestimmung einer Temperatur oder einer Temperaturänderung innerhalb eines Temperaturoperationsbereiches und einem Detektor, **dadurch gekennzeichnet, dass** der Sensor (2, 2') ein Sensormaterial (3) umfasst, das

   - zumindest einen Phasenübergang erster Ordnung aufweist, und/oder
   - aus einer magnetokalorischen Legierung oder einer Shape-Memory-Legierung besteht,

   wobei die kritische Temperatur des Sensormaterials (3) innerhalb des Temperaturoperationsbereichs liegt, und wobei das Sensormaterial (3) zumindest in einer Phase magnetisch ist, dass das Sensormaterial (3) weichmagnetisch ist oder der Sensor (2, 2') mindestens ein weichmagnetisches Material (5) umfasst, welches als Antwort auf ein externes zeitveränderliches magnetisches Feld eine periodisch veränderliche Magnetisierung aufweist, und dass der Detektor das vom Sensormaterial (3) oder vom weichmagnetischen Material (5) ausgesandte magnetische Feld detektiert, das zur Identifikation der Temperatur dient.

2. Sensorvorrichtung nach Anspruch 1, **dadurch gekennzeichnet, dass** das Sensormaterial (3) als ein Biasplättchen (30) ausgebildet ist.

3. Sensorvorrichtung nach Anspruch 1 oder 2, **dadurch gekennzeichnet, dass** das weichmagnetische Material (5) magnetostriktiv ist, welches mit dem Sensormaterial (3) magnetisch wechselwirkt und eine Änderung der Magnetisierung des Sensormaterials (3) auf Grund einer Temperaturänderung zu einer Änderung der mechanischen Resonanzfrequenz des magnetostriktiven weichmagnetischen Materials (5) führt, wobei die Resonanzfrequenz zur Bestimmung der Temperatur herangezogen wird.

4. Sensorvorrichtung nach Anspruch 2, **dadurch gekennzeichnet, dass** das Biasplättchen (30) mit einem im Sensor (2) vorgesehenen, magnetostriktiven Resonatorplättchen (50) magnetisch wechselwirkt und eine Änderung der Magnetisierung des Biasplättchens (30) auf Grund einer Temperaturänderung zu einer Änderung der mechanischen Resonanzfrequenz des Resonatorplättchens führt, wobei die Resonanzfrequenz zur Bestimmung der Temperatur herangezogen wird.

5. Sensorvorrichtung nach Anspruch 1, **dadurch gekennzeichnet, dass** das Sensormaterial (3) mit einem weichmagnetischen Element (11) magnetisch wechselwirkt, wobei der temperaturinduzierte Phasenübergang des Sensormaterials (3) zu einer Änderung des Entmagnetisierungsfaktors des weichmagnetischen Elements führt und dieser zur Identifikation der Temperatur dient.

6. Sensorvorrichtung nach Anspruch 5, **dadurch gekennzeichnet, dass** das weichmagnetische Element (11) als Plättchen ausgebildet ist, an dessen Stirnseiten jeweils das Sensormaterial (3) in Form eines plättchenförmigen Elements (31) angefügt ist, wobei der temperaturinduzierte Phasenübergang der beiden plättchenförmigen Elemente (31) durch eine Änderung der harmonischen Schwingungen des weichmagnetischen Elements (11) des Sensors (2) detektierbar ist.

7. Sensorvorrichtung nach Anspruch 1, **dadurch gekennzeichnet, dass** der temperaturinduzierte Phasenübergang im Sensormaterial (3) von ferromagnetisch zu paramagnetisch oder paramagnetisch zu ferromagnetisch oder ferromagnetischantiferromagnetisch oder anitferromagnetisch-ferromagnetisch ist.

8. Sensorvorrichtung nach Anspruch 1, **dadurch gekennzeichnet, dass** ein Phasenübergang im Sensormaterial (3) durch mechanische Spannung induziert wird und somit der Sensor (2) aktivierbar ist.

9. Sensorvorrichtung nach Anspruch 1, **dadurch gekennzeichnet, dass** bei der kritischen Temperatur im Sensormaterial (3) ein Übergang von Austenit zu Martensit oder ein Übergang von Martensit zu Austenit stattfindet.

10. Sensorvorrichtung nach Anspruch 1, **dadurch gekennzeichnet, dass** das Sensormaterial (3) eine thermische Hysterese aufweist, die größer als 1 °C ist.

11. Sensorvorrichtung nach Anspruch 1, **dadurch gekennzeichnet, dass** der Betrag der maximalen Entropieänderung des Sensormaterial (3) $|\Delta S_m| > 0.01$ (J/kg K) ist.

12. Sensorvorrichtung nach Anspruch 1, **dadurch gekennzeichnet, dass** das Element (50) magnetostriktiv ist und durch das Anlegen eines nicht konstanten magnetischen Feldes zum mechanischen Schwingen angeregt wird, wobei die mechanische Resonanzfrequenz zur Temperaturmessung herangezogen wird.

13. Sensorvorrichtung nach Anspruch 1, **dadurch gekennzeichnet, dass** die Überschreitung der kritischen Temperatur zu einer irreversiblen Magnetisierungsänderung im Sensormaterial (3) führt.

14. Sensorvorrichtung nach Anspruch 1, **dadurch gekennzeichnet, dass** die Unterschreitung der kritischen Temperatur zu einer irreversiblen Magnetisierungsänderung im Sensormaterial (3) führt.

15. Sensorvorrichtung nach Anspruch 13 oder 14, **dadurch gekennzeichnet, dass** die irreversible Änderung der Magnetisierung des Sensormaterials (3) zu einer Änderung der Resonanzfrequenz des mechanisch schwingendes, magnetostriktives Resonatorplättchen (50) führt, welche zur Identifikation der Temperatur herangezogen wird.

16. Sensorvorrichtung nach Anspruch 1, **dadurch gekennzeichnet, dass** das Sensormaterial (3) aus magnetischen Partikeln (32) besteht, die eine Formanisotropie aufweisen, welche zu einer nicht verschwindenden Remanz ($M_r$) führt, wobei $M_r > 0.01$ $M_s$ gilt und $M_s$ die Sättigungsmagnetisierung ist.

17. Sensorvorrichtung nach Anspruch 1, **dadurch gekennzeichnet, dass** das Sensormaterial (3) aus hartmagnetischen Partikeln besteht, die zu weichmagnetischen Partikeln austauschgekoppelt sind.

18. Sensorvorrichtung nach Anspruch 1, **dadurch gekennzeichnet, dass** Sensormaterial (3) in mindestens einer Phase hartmagnetische Eigenschaften besitzt und $M_r > 0.01$ $M_s$.

19. Sensorvorrichtung nach Anspruch 1, **dadurch gekennzeichnet, dass** das Sensormaterial (3) eine Legierung ist, die eines der folgenden Element enthält: Gd, Mn, La, Co, Fe, Nd, Er.

20. Sensorvorrichtung nach Anspruch 1, **dadurch gekennzeichnet, dass** das Sensormaterial (3) eine Manganit Legierung ist.

21. Sensorvorrichtung nach Anspruch 1, **dadurch gekennzeichnet, dass** das Sensormaterial (3) aus Nanokomposite Materialien besteht, welche ein mittleres Kornvolumen im Bereich von $1nm^3$ bis $10\ \mu m^3$ haben.

22. Sensorvorrichtung nach Anspruch 1, **dadurch gekennzeichnet, dass** das Sensormaterial (3) Ni-Mn-In-Co Partikel enthält.

23. Sensorvorrichtung nach Anspruch 1, **dadurch gekennzeichnet, dass** das Sensormaterial (3) Ni-Mn-Ga Partikel enthält.

24. Sensorvorrichtung nach Anspruch 1, **dadurch gekennzeichnet, dass** das Sensormaterial (3) auf Basis einer der Legierungen $Gd_5(Si_{1-x}Ge_x)_4$, Ni-Mn, Ni-Mn-Ga, Ni-Mn-In-(Co), La-Fe-Si, La-Fe-Si-Co, La-Fe-Si-Co-B, , La-Fe-Si-Cu, La-Fe-Si-Ga, La(Fe, Si, Co), $LaFe_xSi_{1-x}$, $La(Fe,Si)_{13}$, $RCo_2$ mit R aus (R=Dy, Ho, Er), $DyAl_2$, $DyNi_2$Tb-Gd-Al, Gd-Ni, Mn-As-Sb, MnFe-P-As ausgebildet ist.

FIG.1

FIG. 2

EP 2 280 262 A1

FIG. 3

EP 2 280 262 A1

$H_{bias}$

3,31          11,5          3,31

FIG.4

FIG.5

FIG.6

FIG.7

100 nm

20 nm

32

FIG.8

FIG.9

FIG. 10

FIG. 11

FIG.12

FIG.13

EP 2 280 262 A1

FIG.14

42
43
44

EP 2 280 262 A1

Plane view

42

FIG.15

FIG.16

Europäisches
Patentamt

European
Patent Office

Office européen
des brevets

**Nummer der Anmeldung**

EP 09 45 0135

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | B.C.DODRILL, B.J.KELLEY: "Magnetic In-Line Metrology for GMR Spin-Valve Sensors" <br><br>2006, XP002564712 <br>Gefunden im Internet: <br>URL:http://web.archive.org/web/20060319074 748/http://www.lakeshore.com/pdf_files/sys tems/vsm/DataTech+GMR.pdf> <br>[gefunden am 2010-01-21] <br>* Abbildungen 1-9 * <br>* das ganze Dokument * <br>----- | 1-24 | INV. <br>G01K7/36 |
| A | SMITH C H ET AL: "Low Magnetic Field Sensing with GMR Sensors, Part 2: GMR Sensors and their Applications" <br>SENSORS, NORTH AMERICAN TECHNOLOGY, PETERBOROUGH, NH, US, <br>1. August 1996 (1996-08-01), Seiten 1-11, XP002298354 <br>ISSN: 0746-9462 <br>* das ganze Dokument * <br>----- | 1-24 | |

RECHERCHIERTE
SACHGEBIETE (IPC)

G01K

Der vorliegende Recherchenbericht wurde für alle Patentansprüche erstellt

| Recherchenort | Abschlußdatum der Recherche | Prüfer |
|---|---|---|
| Den Haag | 22. Januar 2010 | Bagnera, Carlo |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes
  Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 03091679 A1

- US 6208253 B

**In der Beschreibung aufgeführte Nicht-Patentliteratur**

- **C. Zimm ; A. Jastrab ; A. Sternberg ; V. Pecharsky ; K. GSCHNEIDNER ; M. Osborne ; I. Anderson.** Description and performance of a near-room temperature magnetic refrigerator. *Advances in cryogenic engineering,* 1998, vol. 43, 1759-1766
- **G. Herzer.** Der große Lauschangriff auf Ladendiebe. *Physikalische Blaetter,* 2001, vol. 57, 43-48
- **K. Zeng ; C.A. Grimes.** Wireless Magnetoelastic Physical, Chemical, and Biological Sensors. *IEEE Transactions on Magnetics,* 2007, vol. 43, 2358-2363

- **Y. Ma ; S. Awaji ; K. Watanabe ; M. Matsumoto ; N. Kobayashi.** Effect of high magnetic field on the two-step martensitic-phase transition in NiMnGa. *Applied Physics Letters,* 2000, vol. 76, 37
- **D. Suess ; T. Schrefl ; S. Fahler ; M. Kirschner ; G. Hrkac ; F. Dorfbauer ; J. Fidler.** Exchange spring media for perpendicular recording. *Applied Physics Letters,* Juli 2005, vol. 87, 012504-3
- **M.T. Rahman ; N.N. Shams ; Y.C. Wu ; C.H. Lai ; D. Suess.** Magnetic multilayers on porous anodized alumina for percolated perpendicular media. *Applied Physics Letters,* 2007, vol. 91, 132505